# NEUE EUROPÄISCHE PATENTSCHRIFT

(11) **EP 1 407 901 B2**
(45) Veröffentlichungstag und Bekanntmachung des Hinweises auf die Entscheidung über den Einspruch: **03.10.2012**
(45) Hinweis auf die Patenterteilung: 17.05.2006
(21) Anmeldenummer: 03018477.4
(22) Anmeldetag: 14.08.2003
(51) Int. Cl.: B60D 1/54

(54) **Anhängevorrichtung für Zugfahrzeuge**
Towing hitch for towing vehicles
Attelage pour véhicules de traction

(30) Priorität: 09.10.2002 DE 20215508 U; 27.02.2003 WO PCT/EP03/02008
(43) Veröffentlichungstag der Anmeldung: 14.04.2004
(73) Patentinhaber: AL-KO Kober AG, D-89359 Kötz (DE)
(72) Erfinder: Rampp, Armin, 86513 Ursberg/Bayersried (DE); Feustle, Wolfgang, 89312 Günzburg (DE)
(74) Vertreter: Ernicke, Hans-Dieter

(56) Entgegenhaltungen:
- EP-A- 1 009 088
- EP-A- 1 225 067
- EP-A2- 1 084 871
- EP-A2- 1 142 732
- DE-A- 10 004 523
- DE-A- 10 023 640
- DE-A- 10 104 186
- DE-A- 19 521 896
- DE-A1- 19 902 355
- DE-C2- 19 654 867
- US-A- 4 499 790
- US-A- 5 584 621

## Beschreibung

Die Erfindung betrifft eine Anhängevorrichtung für Zugfahrzeuge mit den Merkmalen im Oberbegriff des Hauptanspruchs.

Eine derartige Anhängevorrichtung ist aus der EP 1 142 732 A bekannt.

Eine andere Anhängevorrichtung ist aus der DE 195 21 896 A1 bekannt. Sie besteht aus einer Zugstange, die um zwei rotatorische, nacheinander betätigbare Achsen schwenkbar gelagert ist und die von einem mechanischen Antrieb zwischen einer ausgefahrenen Betriebsstellung und eingefahrenen Ruhestellung am Zugfahrzeug bewegbar ist. Die Anhängevorrichtung besitzt eine automatische und vom mechanischen Antrieb betätigbare Verriegelungsvorrichtung, die als U-förmiger Führungsschlitz für einen Sperrstift ausgebildet ist, mit dem ein Betätigungselement des Antriebs in beiden Endstellungen arretiert werden kann. Diese Verriegelungsvorrichtung hat Stabilitätsprobleme, wenn an der Zugstange in der Betriebsstellung hohe Seitenkräfte angreifen.

Es ist Aufgabe der vorliegenden Erfindung, eine verbesserte Verriegelungsvorrichtung aufzuzeigen.

Die Erfindung löst diese Aufgabe mit den Merkmalen im Hauptanspruch.
Die beanspruchte Verriegelungsvorrichtung hat den Vorteil, dass formschlüssige Riegelelemente in der Verriegelungsstellung direkt an der Zugstange angreifen und diese in ein oder beiden Endstellungen festhalten. Hierdurch ist die Zugstange insbesondere in der ausgefahrenen Betriebsstellung höher belastbar, wobei die Verriegelungsvorrichtung große an der Zugstange angreifende Querkräfte aufnehmen und abstützen kann.

Die Verriegelungsvorrichtung hat besondere Vorteile in Verbindung mit verschwenkbaren Zugstangen, weil hier ein Antrieb zur Betätigung der Schwenkbewegung(en) der Zugstange und zur Betätigung der Verriegelungsvorrichtung ausreicht. Zusätzliche Antriebe für die Verriegelung sind entbehrlich. Insbesondere kann die Verriegelung vollautomatisch bei Betätigung des Antriebs für die Zugstange funktionieren.

Durch die Umsetzung der drehenden Antriebsbewegung in eine translatorische Verriegelungsbewegung findet eine Kräfte- und Bewegungsumlenkung statt, die eine formschlüssige Verriegelung erlaubt und für eine besonders hohe mechanische Belastbarkeit der Verriegelungsvorrichtung sorgt.

In der beanspruchten Ausführungsform ergibt sich ein Platzvorteil für die Kinematik und die Unterbringung der schwenkbaren Zugstange. Die Eintauchöffnung am Fahrzeug kann kleiner werden und besser versteckt werden. Dieser Vorteil wirkt sich besonders günstig in Verbindung mit Anhängevorrichtungen aus, bei denen die Zugstange während der Schwenkbewegung gleichzeitig in einer kardanischen Bewegung um zwei rotatorische Achsen schwenkt.

Die Verriegelungsvorrichtung lässt sich für alle Arten von Anhängevorrichtungen mit Zugstangen einsetzen, die zumindest um eine Achse schwenkbar sind. Besondere Vorteile bestehen bei den vorerwähnten kardanischen Schwenkantrieben. Günstigerweise lassen sich ohnehin vorhandene Antriebsteile für die Verriegelung benutzen. Über Rastelemente, insbesondere einen drehbaren Zahnring mit Sperrkugel auf dem Stangenende oder andere geeignete Teile lässt sich einfach und sicher von der Antriebsbewegung auf die Verriegelungsbewegung und umgekehrt umschalten.

In der besonders klein und schmal bauenden Ausführungsform hat die Verriegelungsvorrichtung Sperrkugeln und Kugelaufnahmen als Riegelelemente. Die translatorische Verriegelungsbewegung ist hierdurch besonders klein und wird von den Sperrkugeln ausgeführt. Außerdem ergeben sich hier besonders günstige Konstruktionen zum Betätigen und zum Lösen der Verriegelungsvorrichtung.

In Verbindung mit der Verriegelungsvorrichtung ist es günstig, bei der kardanisch gelagerten Zugstange und dem zugehörigen mehrteiligen Getriebe ein Drehgetriebe vorzusehen, welches aus einem Zahnkranz am Ende der Zugstange und aus einem in die Verriegelungsvorrichtung integrierten Zahnbogen besteht. Diese Konstruktion baut klein, ist konstruktiv einfach und zudem besonders betriebssicher. Günstig ist außerdem das auftretende Kräfteverhalten.

Die Anhängevorrichtung baut mit ihrer Mechanik sehr klein und findet auch bei beengten Raumverhältnissen im Fahrzeugheck Platz. Besonders die Bautiefe in Fahrzeuglängsrichtung ist gering und liegt im Bereich 80 mm und weniger. Die Anhängevorrichtung hat den weiteren den Vorteil, dass sich die Bewegungen exakt steuern lassen. Zudem kann die Anhängevorrichtung mit einem einzigen mechanischen Antrieb, z.B. einem Antriebsmotor oder einem manuellen Kurbelantrieb oder dgl., auskommen. Dies verringert den Bau- und Kostenaufwand.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 bis 4:: eine Anhängevorrichtung mit Teilen des Fahrzeughecks in verschiedenen Bewegungsstadien zwischen der ausgefahrenen Betriebsstellung und der eingezogenen Ruhestellung in aufgebrochener Seitenansicht,
- Figur 5 bis 7:: die Anhängevorrichtung mit den verschiedenen Bewegungsstellungen von Figur 1 bis 4 aus der Heckansicht,
- Figur 8:: eine perspektivische Ansicht der Zugstange mit einem motorischen Antrieb und einer Verriegelungsvorrichtung,
- Figur 9:: eine teilweise aufgebrochene perspektivische Darstellung der Anhängevorrichtung von Figur 8 in der Einbausituation am Fahrzeugheck,
- Figur 10:: eine noch stärker aufgebrochene Darstellung der Anhängevorrichtung gemäß Figur 9,
- Figur 11:: eine andere aufgebrochene perspektivische Detailansicht der Anhängevorrichtung gemäß Figur 10,
- Figur 12 und 13:: zwei weitere noch stärker aufgebrochene und abstrahierte perspektivische Darstellungen der Anhängevorrichtung von Figur 9 und 10,
- Figur 14 und 15:: eine Variante der Verriegelungsvorrichtung in zwei Betriebsstellungen und unterschiedlich großen Darstellungen,
- Figur 16 bis 19:: aufgebrochene perspektivische Darstellungen einer weiteren Variante des Antriebs der Anhängevorrichtung in verschiedenen Bewegungsstellungen,
- Figur 20:: eine vergrößerte perspektivische Detaildarstellung des Stangenendes in verriegelter Ruhestellung
- Figur 21:: eine vergrößerte perspektivische Detaildarstellung eines Zahnrings,
- Figur 22:: eine Seitenansicht der Zugstange von Figur 16 bis 20 mit Stromübertrager,
- Figur 23:: eine perspektivische Seitenansicht des Gehäuses zur Antriebsvariante von Figur 16 bis 20 und
- Figur 24 bis 25:: teilweise aufgebrochene perspektivische Darstellungen des Antriebs in der Zusammenbausituation.

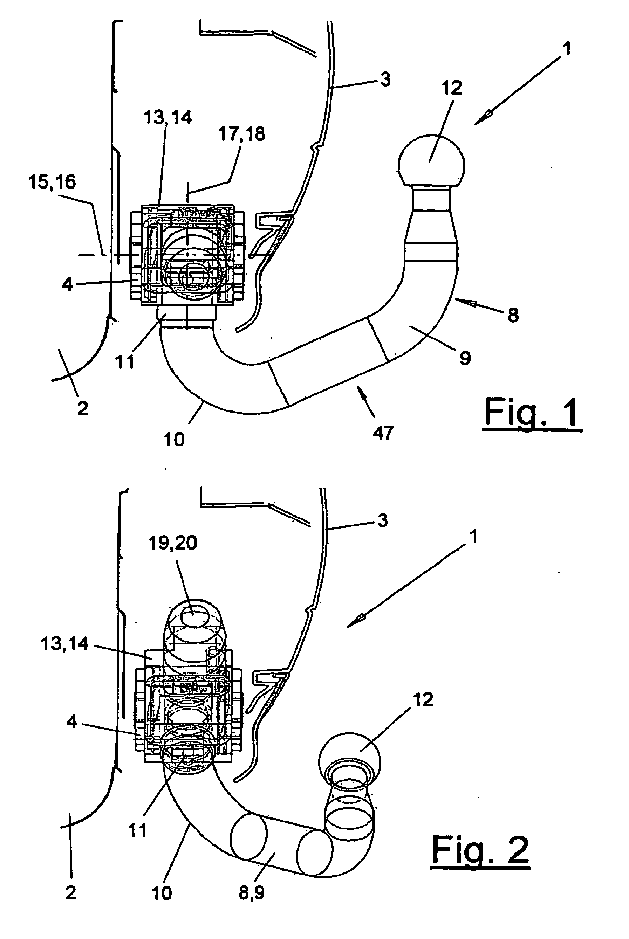

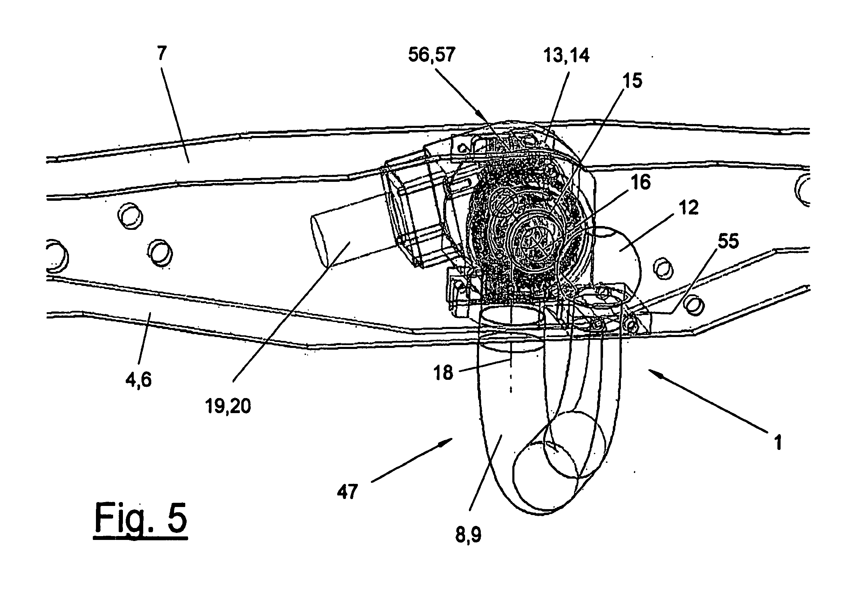

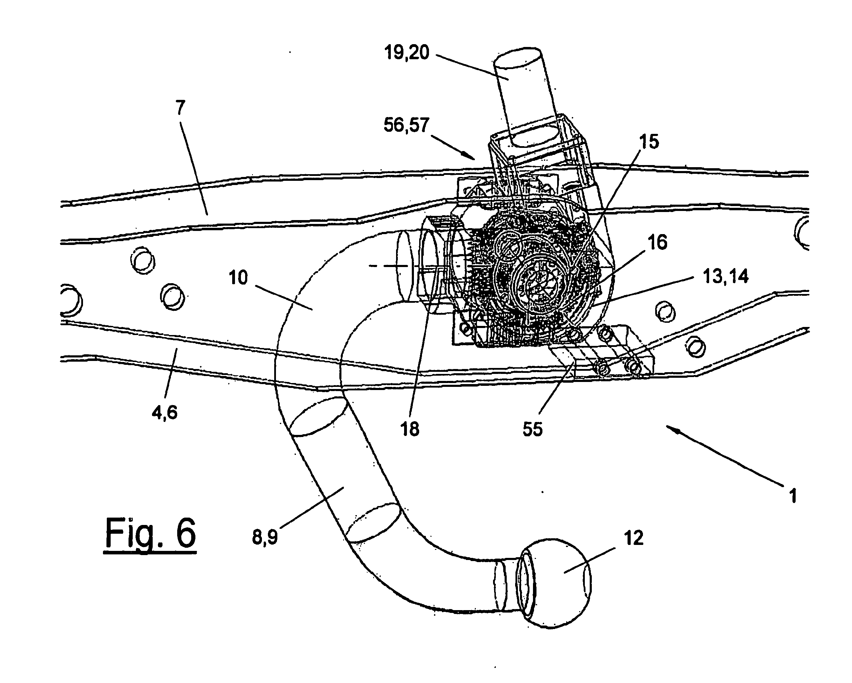

Figur 1 bis 4 zeigen eine Anhängevorrichtung (1) am Heck (3) eines Fahrzeugs (2) in aufgebrochener Seitenansicht und in verschiedenen Bewegungsstellungen. Figur 5 bis 7 zeigen hierzu die entsprechenden Bewegungsstellungen in Heckansicht von hinten.

Die Anhängevorrichtung (1) ist dem Zugfahrzeug (2) zugeordnet und ist in einem Hohlraum des Fahrzeughecks (3) verborgen untergebracht, welcher an der Unterseite eine Hecköffnung (52) besitzt. Die Anhängevorrichtung (1) hat eine vorzugsweise zweifach oder im Wesentlichen U-förmig gekrümmte Zugstange (8), die am freien hoch ragenden Ende des Stangenhalses (9) einen geeigneten Zugkopf (12), z.B. einen üblichen Kugelkopf trägt. Die Zugstange (8) besteht vorzugsweise aus Metall, z.B. Stahl oder Leichtmetall. Der Stangenhals (9) geht nach einer ersten Krümmung (10) in einen schräg nach hinten abfallenden geraden Abschnitt und dann über eine weitere Krümmung (10) in ein weiteres gerades und senkrecht stehendes Stangenende (11) über.

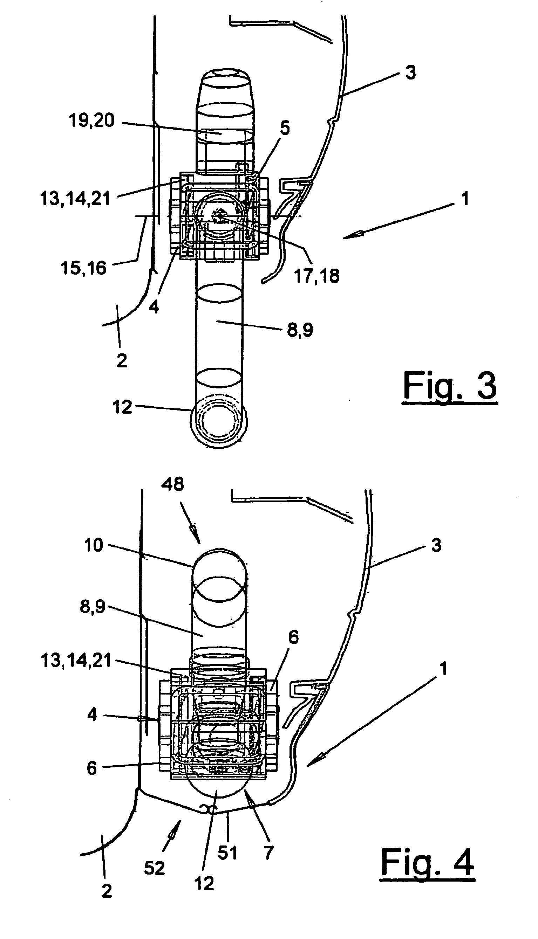

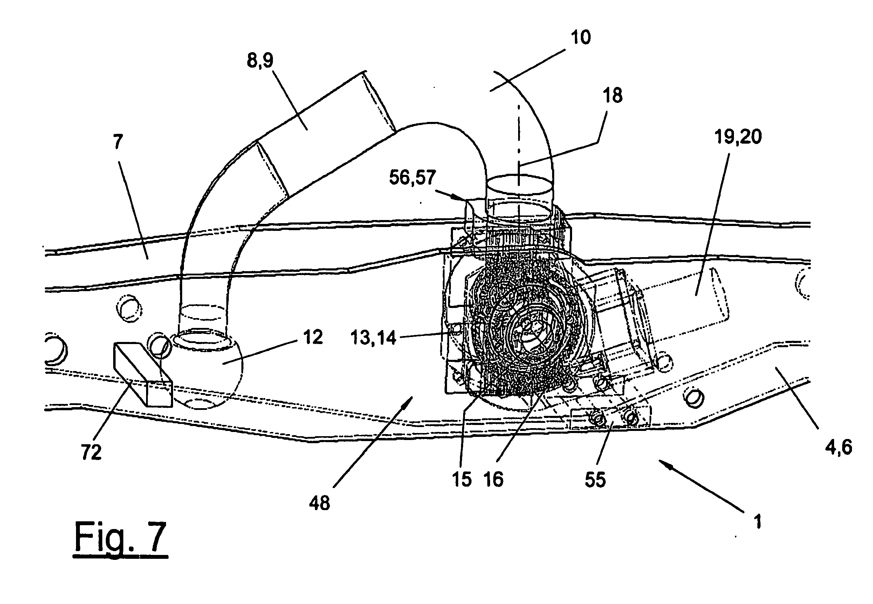

Figur 1 und 5 zeigen hierzu die Betriebsstellung (47), in der die ausgefahrene Zugstange (8) die vorbeschriebenen Stellungen und Ausrichtungen einnimmt und mit ihrem Kugelkopf (12) ankuppelbereit mit Abstand vor der Heckschürze (3) positioniert ist. Figur 4 und 7 zeigen die eingefahrene Ruhestellung (48) der Zugstange (8).

Die Kugelstange (8) ist vorzugsweise zweiachsig kardanisch gelagert und wird durch einen mechanischen und vorzugsweise motorisierten Antrieb (13) bewegt. Der Antriebsmotor (20) ist vorzugsweise als Elektromotor, insbesondere als Getriebemotor ausgebildet. Er wird über einen geeigneten Kabelschlepp von der Stromversorgung des Zugfahrzeugs (2) mit Betriebsspannung und Steuersignalen versorgt. Die Anhängevorrichtung (1) besitzt ferner eine nicht dargestellte Steuerung, die mit entsprechenden Bedienelementen für die Positionierung im Zugfahrzeug (2) ausgerüstet oder solchen ggf. fahrzeugseitig bereits vorhandenen Bedienelementen verbunden ist. Die Anhängevorrichtung (1) kann hierdurch zwischen ihren Endlagen (47,48) hin- und herbewegt werden, wobei Kontrollleuchten oder dergleichen die korrekte Funktion oder auch Fehlfunktionen anzeigen. Die Steuerung kann vom Fahrzeuginnenraum, alternativ aber auch von außen über eine vorzugsweise drahtlose Fernbedienung per Funk, Infrarot oder dgl. betätigt werden.

Der Kabelschlepp kann außerdem mit einer Steckdose an der Zugstange (8) verbunden sein und ihr die erforderliche Betriebsspannung und Signal- oder Steuerspannungen zuleiten. Über die zentrale Steuerung der Anhängevorrichtung (1) können hierbei die genannten Ströme oder Spannungen an der Steckdose (43) in Ruhestellung (48) abgeschaltet und in Betriebsstellung (47) aufgeschaltet werden.

Die Anhängevorrichtung (1) besitzt eine nachfolgend näher beschriebene Verriegelungsvorrichtung (56), mit der die Zugstange (8) in mindestens einer ihrer Endstellungen, vorzugsweise in der Betriebsstellung (47) durch Riegelelemente (58,59) formschlüssig verriegelt und festgehalten werden kann. Der Antrieb (13) wird hierdurch entlastet.

Das rückwärtige Stangenende (11) ist mittels eines Drehlagers (17) in einem Gehäuse (19) um eine zentrale Drehachse (18) drehbar gelagert. Das Gehäuse (19) ist seinerseits über eine quer zur Drehachse (18) liegende Schwenkachse (16) und ein zugehöriges Schwenklager (15) an einem Querträger (4) im Heckbereich (3) des Zugfahrzeugs (2) gelagert. Die rotatorischen Achsen (16,18) sind vorzugsweise in der Art einer kardanischen Lagerung rechtwinklig zueinander ausgerichtet und schneiden sich. Die Schwenkachse (16) erstreckt sich vorzugsweise entlang der Längsachse des Zugfahrzeugs. Der Querträger (4) kann Bestandteil der Anhängevorrichtung (1) sein. Er kann aber auch bauseits am Zugfahrzeug vorhanden sein.

Wie Figur 1 bis 4 und 5 bis 6 verdeutlichen, kann die Zugstange (8) dank der kardanischen Lagerung aus der in Figur 1 und 5 dargestellten ausgefahrenen Betriebsstellung (47) in eine in Figur 4 und 7 dargestellte zurückgezogene Ruhestellung (48) bewegt werden. Figur 2 und 3 sowie 6 zeigen die dabei eingenommenen Zwischenstellungen. Die Zugstange (8) führt hierbei eine überlagerte und zumindest bereichsweise gleichzeitige Rotationsbewegung um beide rotatorischen Achsen (16,18) aus. Die Zugstange (8) dreht um ihre Drehachse (18) am Stangenende (11) um vorzugsweise 90°, wobei sie über die Schwenkbewegung des Gehäuses (19) um einen größeren Winkel von z.B. 180° bis 190° um die Schwenkachse (16) bewegt wird.

Hierbei bewegt sich die zweifach gekrümmte Zugstange (8) mit ihrem Kugelkopf (12) in einer wenig ausladenden Bahn unter dem unteren Ende der Heckschürze (3) hindurch und kann dann am Ende in den Hohlraum (7) hinter Heckschürze (3) eintauchen. In der Ruhestellung (48) ist in dieser bevorzugten Ausführungsform von der Zugstange (8) und einer an der Zugstange (8) angebrachten und mitbewegten Steckdose von außen nichts mehr zu sehen. Die Teile sind vollständig hinter der Heckschürze (3) verborgen. Hierbei nimmt die Zugstange (8) in der Ruhestellung (48) eine quer zur Fahrzeuglängsachse ausgerichtete Stellung ein, in der sie mit ihren Krümmungen (10) nach oben weist.

In den beiden Endstellungen (47,48) können die Schwenkbewegungen der Zugstange (8) durch relativ ortsfeste Anschläge (55,72) am Querträger (4) begrenzt werden. Für die ausgefahrene Betriebsstellung (47) ist ein Anschlag (55) wirksam, an dem die Zugstange (8) mit einem unterhalb des Gehäuses (19) angeordneten Ansatz an einem Stangenbund (36) anschlägt. In der Ruhestellung (48) kommt der Kugelkopf (12) an einem quer liegenden Anschlag (72) zur Anlage. Figur 7 zeigt beide Anschläge (55,72).

Wie Figur (4) verdeutlicht, besitzt die Anhängevorrichtung (1) mindestens eine Dichtung (51), die an der Unterseite des Querträgers (4) und/oder an der Heckschürze (3) angeordnet ist. Die Dichtung (51) kann den nachfolgend näher erläuterten Freiraum (7) zumindest in der Ruhestellung (48) der Zugstange (8) nach unten verschließen. Sie kann z.B. aus einer Lippendichtung oder aus einem mit der Zugstange (8) verbundenen und an der Hecköffnung hin und her beweglichen Schieber oder dergleichen anderer Konstruktion bestehen.

Der mechanische Antrieb (13) besitzt eine Einrichtung (14) zur Erzeugung der überlagerten Rotationsbewegung der Zugstange (8) um die beiden rotatorischen Achsen (16,18). Die Einrichtung (14) ist vorzugsweise als mehrteiliges Getriebe (21) ausgebildet, welches aus einem Schwenkgetriebe (22) und einem Drehgetriebe (23) besteht.

Der Querträger (4) hat im vorzugsweise mittleren Bereich, wo üblicherweise die Anhängevorrichtung (1) am Zugfahrzeug (2) positioniert ist, einen längs gestreckten Freiraum (7), in den sich die Zugstange (8) mit dem Gehäuse (19) sowie der Steckdose bewegen kann, wobei das Gehäuse (19) an den den Freiraum (7) umgebenden Wänden schwenkbar gelagert sein kann. Der Querträger (4) besteht hierzu beispielsweise aus zwei quer zur Fahrzeuglängsachse ausgerichteten Tragrohren (5) oder anderen geeigneten Trägerelementen, die im Mittenbereich des Fahrzeugs unter Bildung des Freiraums (7) in Fahrzeuglängsrichtung voneinander seitlich distanziert sind. Der Freiraum (7) wird seitlich begrenzt durch zwei parallele Tragplatten (6), die endseitig an den beiden Tragrohren (5) befestigt, z.B. angeschweißt sind. Die Tragplatten (6) bilden in der Mitte jeweils ein Schwenklagerteil (39), welches z.B. als Lagerauge ausgebildet ist, indem die zweiten, mit dem Gehäuse (19) verbundenen zapfenartigen Schwenklagerteile (38) drehbar und gegebenenfalls in Verbindung mit der Verriegelungsvorrichtung (56) verschieblich gelagert und geführt ist.

In den gezeigten Ausführungsbeispielen ist der Antriebsmotor (20) mit der Zugstange (8) verbunden und am Gehäuse (19) angeordnet. Er wird bei den Stangen- und Gehäusebewegungen mitbewegt. Figur 1 bis 4 und 5 bis 7 verdeutlichen diese Lageänderungen.

Die Einrichtung (14) zur Erzeugung der überlagerten Rotationsbewegungen ist vorzugsweise als das erwähnte zweiteilige Getriebe (21) ausgebildet, welches die rotatorischen Achsen (16,18) koppelt. Das eine Getriebeteil ist als Schwenkgetriebe (22) ausgebildet und wirkt auf die Schwenkachse (16) ein. Das andere Getriebeteil ist als Drehgetriebe (23) ausgebildet und wirkt auf die Drehachse (18) ein. Die Getriebeteile (22,23) sind bewegungsmäßig miteinander gekoppelt, wobei vorzugsweise die Drehbewegung um die Drehachse (18) von der in diesem Ausführungsbeispiel größeren Schwenkbewegung um die Schwenkachse (16) abgeleitet wird. Der Antriebsmotor (20) erzeugt hierbei in der nachfolgenden beschriebenen Weise zunächst die Schwenkbewegung des Gehäuses (19) mit der darin gelagerten Zugstange (8) um die Schwenkachse (16), von der dann die Drehbewegung der Zugstange (8) um die Drehachse (18) abgeleitet wird.

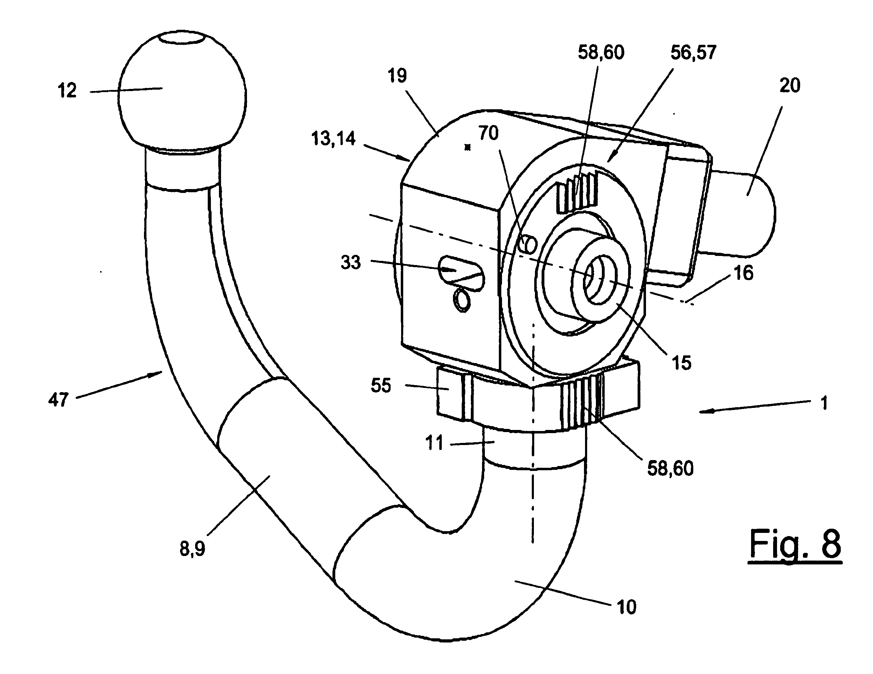

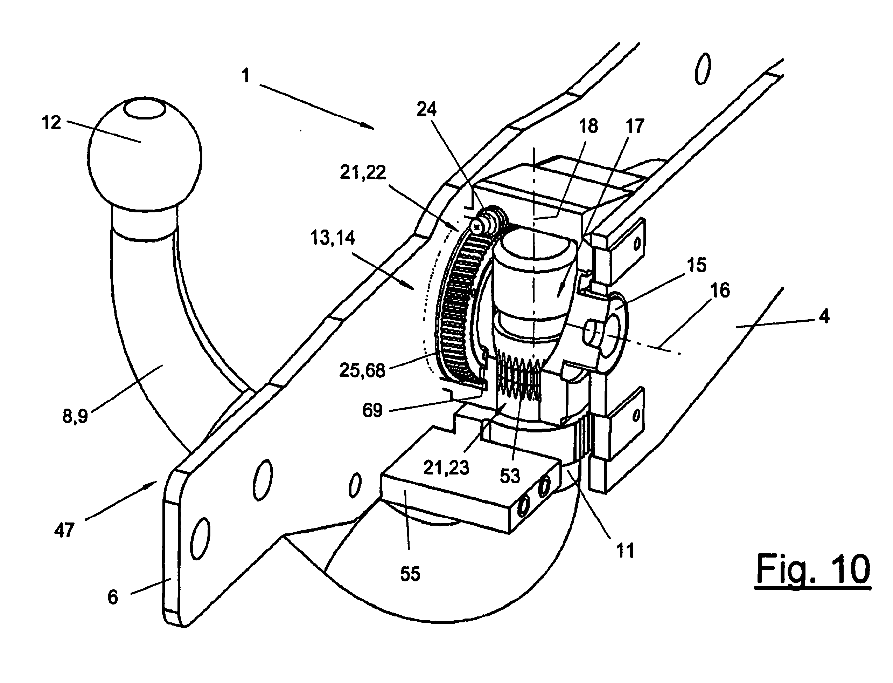

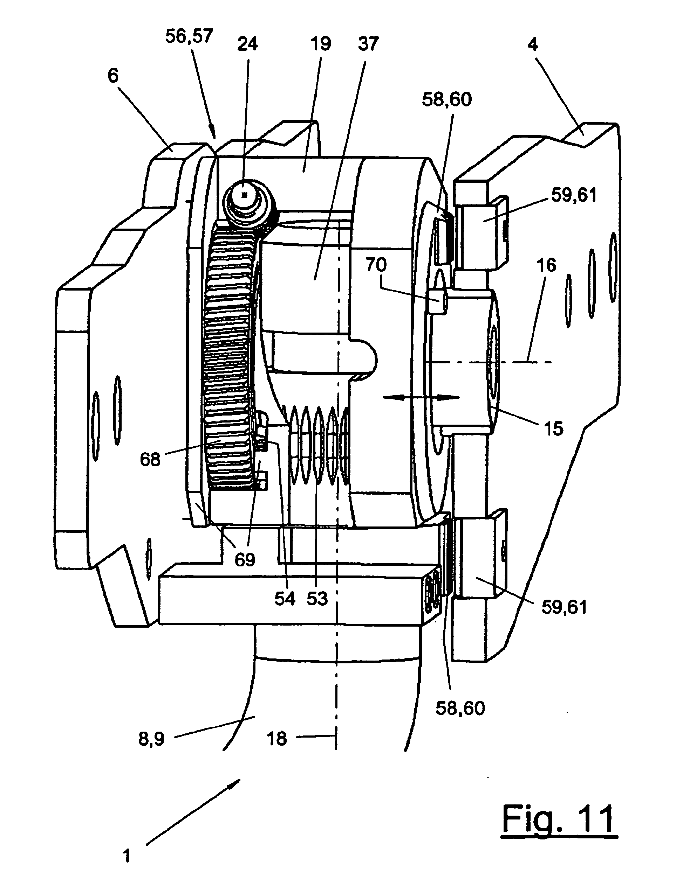

Wie Figur 8 verdeutlicht, ist der rotatorisch treibende Antriebsmotor (20) endseitig am Gehäuse (19) angeflanscht. Er ist mit einem in Figur 10 und 11 dargestellten Antriebselement (24) des Schwenkgetriebes (22) verbunden, welches z.B. als Schneckenwelle ausgebildet ist und mit einem relativ ortsfesten Abstützelement (25) in Eingriff steht. Dies ist ein in Figur 10 und 11 dargestelltes Zahnrad (68), vorzugsweise ein Schneckenrad, das auf einem Stützring (31) zeitweise stationär an der benachbarten Tragplatte (6) befestigt ist. Das Zahnrad (68) und der Stützring (31) sind konzentrisch zur Schwenkachse (16) angeordnet und besitzen innenseitig eine kreisrunde Durchgangsöffnung für den Lagerzapfen (38) des Schwenklagers (15) am Gehäuse (19). Vorzugsweise ist das Zahnrad (68) an der dem Fahrzeugheck (3) zugewandten Seite des Querträgers (4) angeordnet. Die Anordnung kann alternativ auch umgekehrt sein.

Das Zahnrad (68) ist zugleich Bestandteil der Verriegelungsvorrichtung (56). Während der normalen Schwenkbewegungen der Zahnstange (8) zwischen ihren Endstellungen (47,48) ist das Zahnrad (68) stationär und relativ ortsfest auf dem Stützring (31) gelagert und gehalten. Die tangential angestellte Schneckenwelle (24) kämmt mit dem außen verzahnten Zahnrad (68). Durch eine Drehung der Schneckenwelle (24) bewegt sich der Antriebsmotor (20) mit dem angeflanschten Gehäuse (19) in der gewünschten Drehrichtung um die Schwenkachse (16) nach links oder rechts.

Für die Verriegelungsfunktion kann die starre Verbindung zwischen Stützring (31) und Zahnrad (68) gelöst werden, wobei sich das Zahnrad (68) gegenüber dem Stützring (31) dreht und gegebenenfalls auch zusätzlich eine längs der Achse (16) zur Fahrzeugvorderseite gerichtete translatorische Bewegung ausführt. Hierauf wird nachfolgend noch im einzelnen eingegangen.

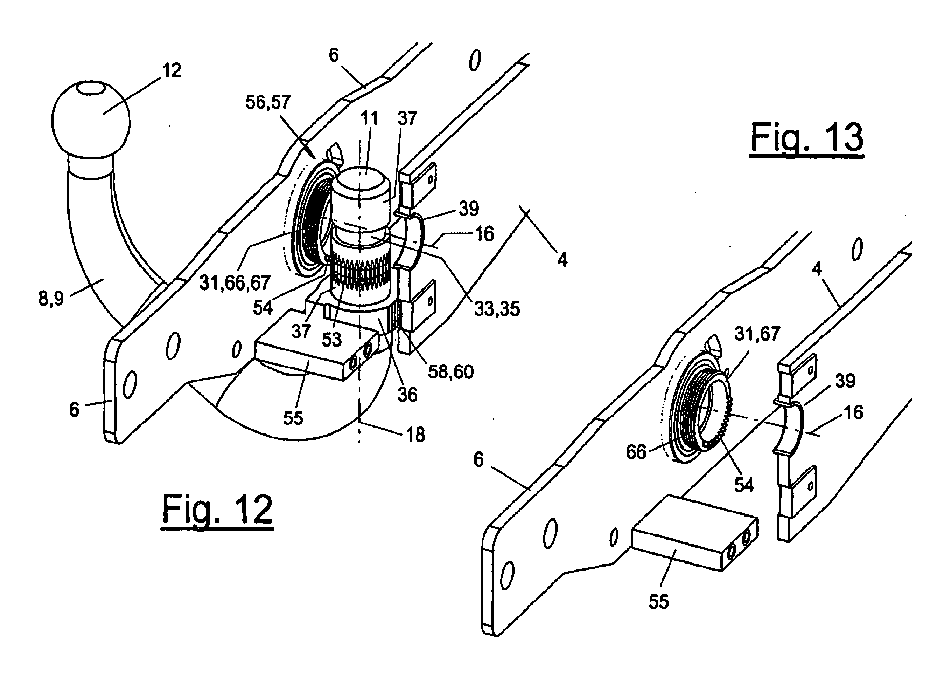

Im Gehäuse (19) ist das Drehgetriebe (23) angeordnet, welches aus einem am Stangenende (11) umfangseitig angeordneten Zahnkranz (53) und einem zur Schwenkachse (16) konzentrischen Zahnbogen (54) an der Stirnseite des relativ ortsfesten Stützrings (31) besteht. Diese Anordnung ist aus Figur 12 und 13 ersichtlich. Zur Bildung des Drehlagers (17) sind am Stangenende (11) beidseits des Zahnkranzes (53) zwei Drehlagerflächen (37) vorhanden. Zwischen diesen kann eine umfangseitige Sicherungsnut (35) zur Bildung einer Axialsicherung (33) vorhanden sein. Hier kann ein durch eine Gehäuseöffnung von außen einsteckbarer Schieber angreifen. Das Gehäuse (19) hat im Bereich des Zahnbogens (54) eine kreisbogenförmige Öffnung, durch die der Zahnbogen (54) hindurch greifen und mit dem Zahnkranz (53) kämmen kann.

Wenn bei der eingangs erwähnten Schwenkbewegung das Gehäuse (19) mit der darin gelagerten Zugstange (8) um die Schwenkachse (16) schwenkt, wälzt der Zahnkranz (53) auf dem Zahnbogen (54) ab, wodurch die Zahnstange (8) um die Drehachse (18) gedreht wird. Der Zahnbogen (54) und der Zahnkranz (53) können eine hierfür geeignete und auf die gewünschte Überlagerung von Dreh- und Schwenkbewegung abgestimmte Anordnung und Ausbildung der Verzahnung haben. Dies betrifft einerseits die Übersetzung der Verzahnung und andererseits auch die Anordnung und Länge des Zahnbogens (54). Sobald die Zahnstange (8) in den Freiraum (7) des Querträgers (4) eintaucht, kommt der Zahnkranz (53) außer Eingriff mit dem Zahnbogen (54), so dass die Drehbewegung beendet ist und die Zugstange (8) nur noch um die Schwenkachse (16) in die Ruhestellung (48) verschwenkt wird. Dementsprechend ist die Winkellage des Zahnbogens (54) relativ zur Schwenkachse (16) gewählt. Beim Ausfahren der Zugstange (8) aus der Ruhestellung (48) in die Betriebsstellung (47) finden die vorbeschriebenen Bewegungen in umgekehrter Reihenfolge statt.

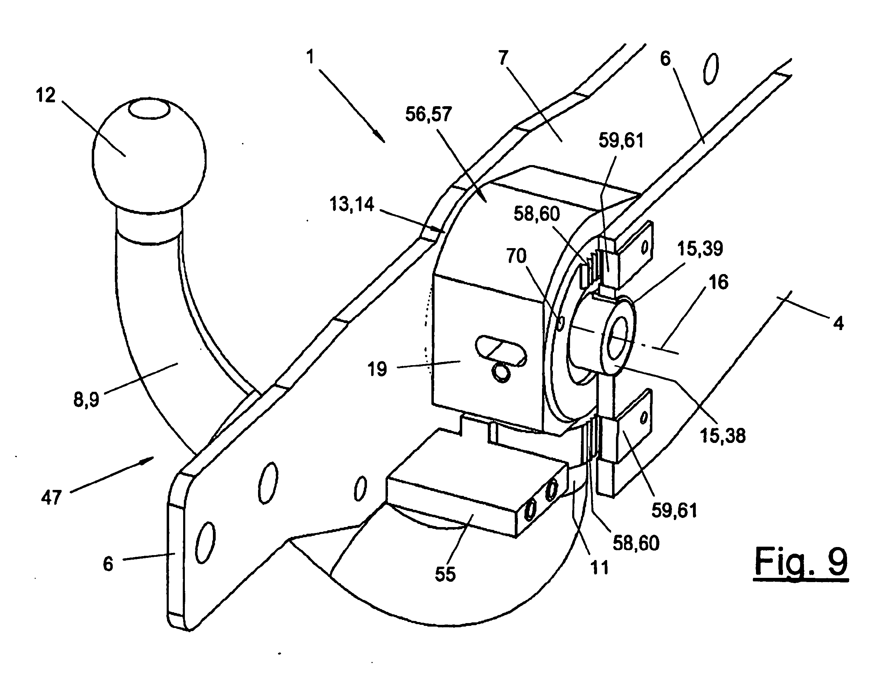

Zur Sicherung der Zugstange (8) in mindestens einer ihrer Endstellungen, vorzugsweise der Betriebsstellung (47), ist die Verriegelungsvorrichtung (56) vorhanden. Sie besitzt eine Übertragungsvorrichtung (57) zum Umsetzen der drehenden Antriebsbewegung in eine translatorische Verriegelungsbewegung für die Betätigung von formschlüssigen Riegelelementen (58,59), die an der Zugstange (8) und gegebenenfalls auch am Gehäuse (19) angreifen. In Figur 8 bis 13 und Figur 14, 15 sind zwei verschiedene Verriegelungsvorrichtungen (56) und der Übertragungsvorrichtungen (57) dargestellt.

In beiden Fällen wird für die Verriegelung die zunächst starre Verbindung zwischen dem Zahnrad (68) und dem Stützring (31) gelöst, wodurch das Zahnrad (68) sich selbst um die Schwenkachse (16) drehen kann. Diese Drehbewegung wird zur Erzeugung der translatorischen Verriegelungsbewegung benutzt. Die Lagerung oder temporäre Befestigung des Zahnrads (68) auf dem Stützring (31) ist größer als die Widerstände, die den Schwenkbewegungen der Zugstange (8) entgegen stehen, so dass das Zahnrad (68) sich während dieser Schwenkbewegungen in einer Anschlaglage fest sitzt, die erst gelöst werden kann, wenn die Zugstange (8) oder gegebenenfalls auch das Gehäuse (19) gegen den Anschlag (55) in der Endstellung anläuft.

In der Variante von Figur 8 bis 13, die nicht unter Anspruch 1 fällt, sind die Riegelelemente (58,59) vorzugsweise als Zahnleisten (60,61) ausgebildet und auf der zur Fahrzeugvorderfront weisenden Querträgerseite angeordnet. Die Zahnleisten (60,61) werden durch eine translatorische Verschiebebewegung der Zugstange (8) und des Gehäuses (19) gegenseitig in formschlüssigen Eingriff gebracht. Hierbei sind sowohl am Gehäuse (19), wie auch am Stangenbund (36) horizontal sich erstreckende Zahnleisten (60) vorhanden, die mit entsprechenden Gegenzahnleisten (61) an der benachbarten Tragplatte (6) in Eingriff treten. Die Zahnleisten (60,61) haben mehrere Zähne mit einem vorzugsweise trapezförmigen Querschnitt, die durch große Tragflächen die Abstützung von hohen auf die Zugstange (8), insbesondere den Kugelkopf (12), einwirkenden Querkräften erlauben. In den Zeichnungen ist die Verriegelungsvorrichtung (56) jeweils in der Ausgangsposition zu Beginn der Verriegelungsbewegung dargestellt, in der die Riegelelemente (58,59) distanziert sind und noch nicht ineinander greifen.

Zur Erzeugung der translatorischen Verschiebebewegung der Zugstange (8) ist der Stützring (31) als Gewindehülse (67) mit einem außenseitigen Bewegungsgewinde (66) ausgebildet. Figur 12 und 13 zeigen diese Anordnung. Das Zahnrad (68) hat ein entsprechendes Innengewinde. Die Hemmung des Bewegungsgewindes (66) ist größer als die Widerstände bei den Schwenkbewegungen der Zugstange (8). Sobald jedoch die Anschlagstellung von Figur 10 oder 11 erreicht ist, kann die weiterdrehende Schneckenwelle (24) das Zahnrad (68) auf dem Bewegungsgewinde (66) drehen.

Das Zahnrad (68) ist zumindest teilweise vom Gehäuse (19) umgeben und ist dort beidseits über entsprechende Führungsmittel (69) geführt. Das Zahnrad (68) kann sich hierdurch bei seiner Schraubenbewegung gegenüber dem in Anschlagstellung schwenkfesten Gehäuse (19) drehen, wobei es das Gehäuse (19) über die Führungen (69) bei seiner translatorischen Verschiebebewegung mitnimmt. Durch die Schiebelagerung des Schwenklagers (15) kann hierbei das Gehäuse (19) mitsamt der Zugstange (8) entlang der Schwenkachse (16) zur gegenüber liegenden Tragplatte (6) verschoben werden, wodurch die dort angeordneten Riegelelemente (58,59) in Eingriff treten. In der Riegelstellung kann der Antriebsmotor (20) auf geeignete Weise abgeschaltet werden, z.B. über Endschalter oder einer Motorstrommessung.

Das Gehäuse (19) kann ein oder mehrere Drehsicherungen aufweisen. Beispielsweise ist ein neben den Zahnleisten (60) angeordneter und parallel zur Achse (16) ausgerichteter Sperrstift (70) vorhanden, der beim Verriegeln in eine entsprechende Aufnahmeöffnung an der Tragplatte (6) greift. Wenn zum Einschwenken der Zugstange (8) in die Ruhestellung (48) die Verriegelung in der Betriebsstellung (47) wieder gelöst werden soll, verhindert die Drehsperre (70) ein Drehen des Gehäuses (19) um die Schwenkachse (16), so dass der Antriebsmotor (20) zunächst mittels der Schneckenwelle (24) das Zahnrad (68) in Gegenrichtung zurück in die Anschlagstellung dreht und zugleich das Gehäuse (19) mit der Zugstange (8) aus der Verriegelungsstellung verschiebt. Der Sperrstift (70) ist hierbei länger als die Zahnhöhe der Zahnleisten (60,61) und wirkt auch noch als Drehsperre nach Lösen des Verzahnungseingriffs. Zusätzlich kann auch ein weiteres Sperrelement, z.B. eine federbelastete Kugelraste oder dergleichen zwischen dem Gehäuse (19) und der verriegelungseitigen Tragplatte (6) vorhanden sein. Erst wenn das Zahnrad (68) am Ende des Bewegungsgewindes (66) in Anschlagstellung kommt und nicht mehr weiter drehen kann, lässt sich die Drehsperre lösen und das Gehäuse (19) zum Einschwenken der Zugstange (8) um die Schwenkachse (16) drehen.

Bei der Rückfahrbewegung wird auch der Verzahnungseingriff für das Drehgetriebe (23) wieder geschlossen. Der translatorische Verriegelungshub kann z.B. ca. 4 mm betragen.

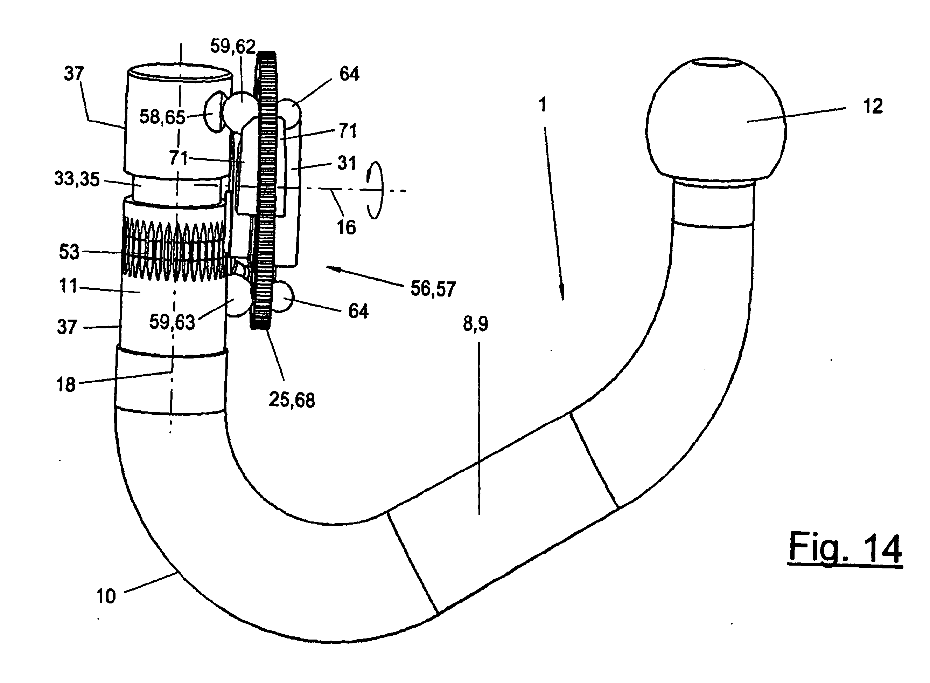

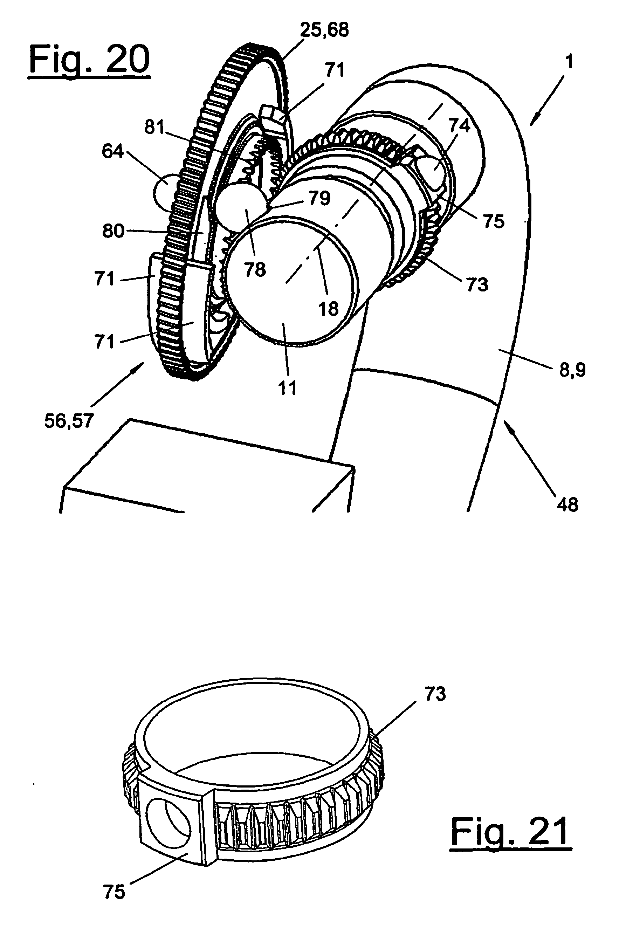

In einer anderen Variante von Figur 14 bis 23 sind die Riegelelemente (58,59) als Sperrkugel (62,63,64) ausgebildet, wobei ihre translatorische Verriegelungsbewegung durch konzentrisch gebogene Kulissenführungen (71) am Zahnrad (68) bewirkt wird, welche in Drehrichtung schräg nach außen ansteigende Führungsflächen zum Verdrängen der Sperrkugeln (62,63,64) aufweisen. Das Zahnrad (68) braucht in diesem Fall keine eigene translatorische Verschiebebewegung auszuführen. Es ist daher vorzugsweise nur drehbar und verschiebefest auf dem an der Tragplatte (6) befestigten Stützring (31) gelagert.

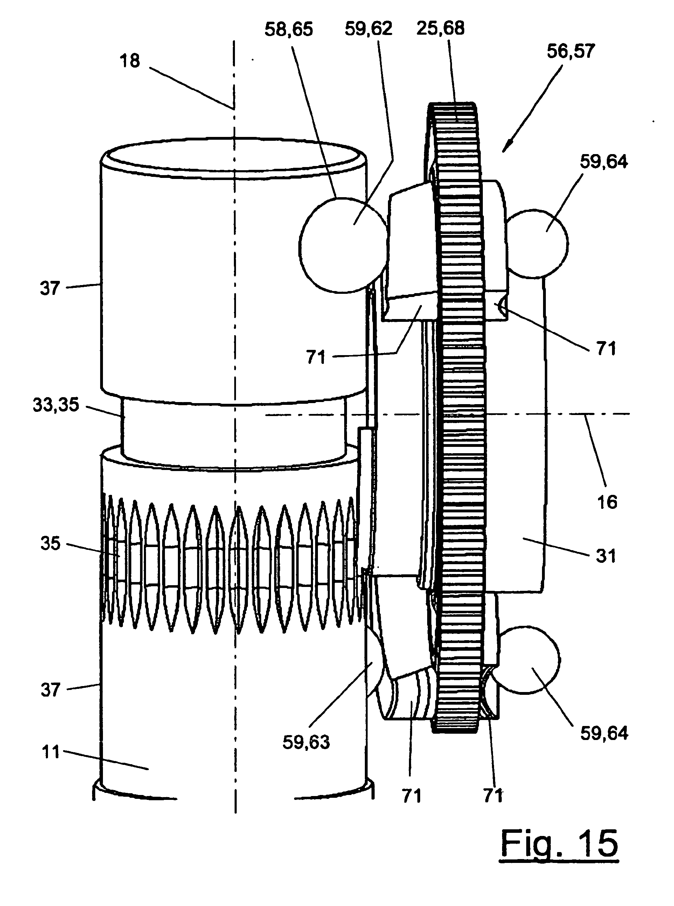

Figur 14 zeigt die Verriegelungsvorrichtung (56) am Anfang der Verriegelungsbewegung. Figur 15 zeigt die Endstellung.

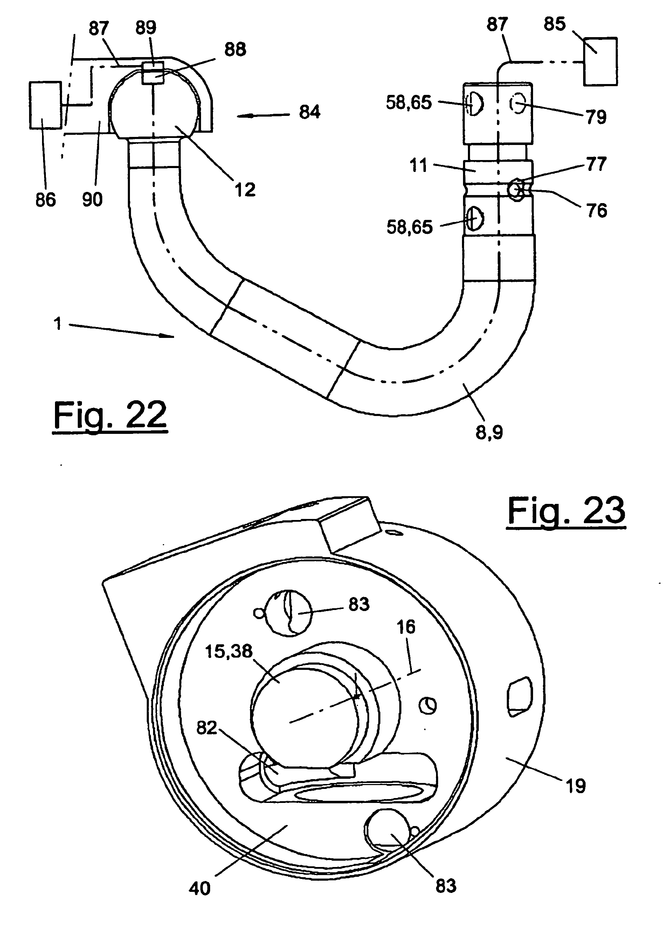

Am Stangenende (11) sind ein oder mehrere vertiefte Aufnahmen, vorzugsweise Kugelaufnahmen (65), angeordnet, in die die jeweils zugehörige Sperrkugel (62,63) eintauchen kann. Die Kugelaufnahmen (65) sind im Querschnitt kreisrund und bieten eine Seitenführung für die Sperrkugeln (62,63). Sie sind außerdem bezüglich der Drehachse (18) in unterschiedlichen Winkelstellungen und zudem in unterschiedlichen axialen Höhenlagen am Stangenende (11) angeordnet. Figur 22 zeigt diese Anordnung mit unterschiedlichen Strichstärken für die sichtbare und die verborgene Seite. Diese unterschiedlichen Winkelstellungen und Höhenlagen sind auf die Lage der Öffnungen (83) am Gehäuse (19) abgestimmt und korrespondieren mit ein oder beiden Endstellungen (47,48), d.h. Ruhe- und/oder Betriebsstellung der Zugstange (8).

Durch diese Gestaltung können die im Gehäuse (19) auf geeignete und in Figur 14 und 15 nicht dargestellter Weise geführten Sperrkugeln (62,63) erst in der Anschlagstellung der Kugelstange (8) am Anschlag (55) in die Kugelaufnahmen (65) gelangen. Während der Schwenkbewegungen der Zugstange (8) wälzen die Sperrkugeln (62,63) hingegen am Außenumfang des Stangenendes (11) bzw. der Drehlagerfläche (37) ab und sind in ihren Kugelführungen am Gehäuse (19) (nicht dargestellt) zurückgedrängt und eingetaucht. Hierdurch wirken die Sperrkugeln (62,63) zugleich auch als Drehsperre für das Zahnrad (68). Die zurückgezogenen Sperrkugeln (62,63) können nicht auf den Kulissenführungen (71) aufgleiten und sperren somit deren Drehbewegung um die Achse (16).

Erst wenn die vorerwähnte Anschlagstellung der Zugstange (8) in der Betriebsstellung (47) erreicht ist, kann das Zahnrad (68) drehen und über die Kulissenführungen (71) die Sperrkugeln (62,63) aus ihrer zurückgezogenen Stellung verdrängen und in die Kugelaufnahmen (65) schieben. Hierbei können auf der anderen Zahnradseite über dortige Kulissenführungen (71) auch zusätzliche Sperrkugeln (64) in entsprechende Kugelaufnahmen (nicht dargestellt) am Gehäuse (19) oder an der benachbarten Tragplatte (6) geschoben werden und eine zusätzliche formschlüssige Verriegelung bewirken.

Zum Lösen der Verriegelungsvorrichtung (56) wird das Zahnrad (68) über den Antriebsmotor (20) rückwärts bewegt, bis ein nicht dargestellter Anschlag erreicht ist und die Kulissenführungen die Sperrkugeln (62,63,64) wieder freigeben. Der Drehwinkel des Zahnrads (68) ist hierfür entsprechend begrenzt. In seiner Anschlagstellung wirkt das Zahnrad (68) wieder als Abstützelement (25), so dass die weitere Antriebsbewegung eine Drehung des Gehäuses (19) um die Schwenkachse (16) zum Einschwenken der Kugelstange (8) bewirkt.

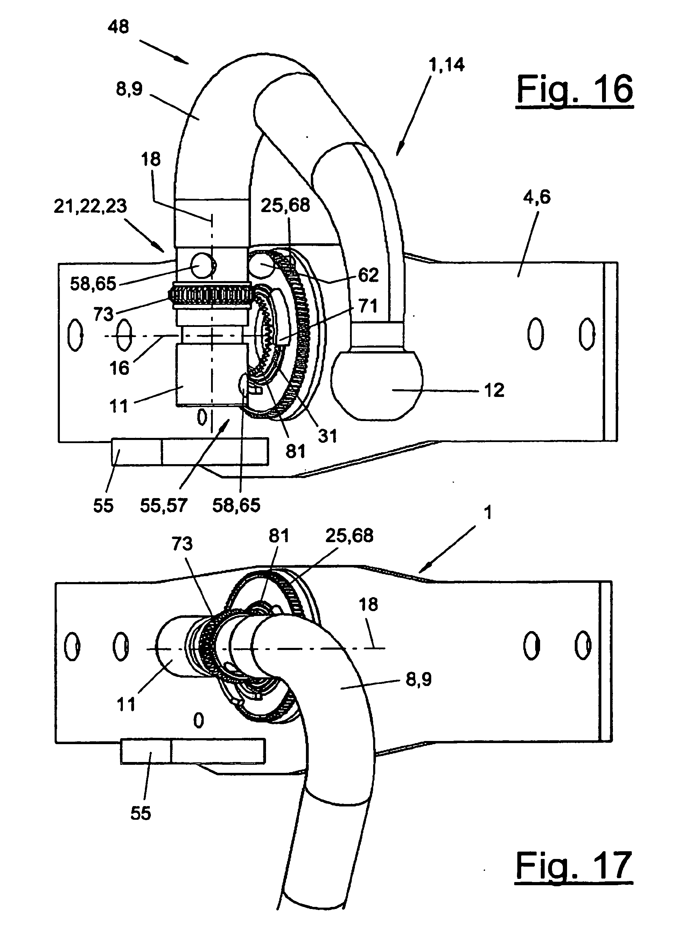

Figur 16 bis 25 zeigen eine dritte Variante des Antriebs (13) und des Getriebes (21) sowie der Verriegelungsvorrichtung (56).

Bei dieser dritten Variante ist ein ständiger Verzahnungseingriff beim Drehgetriebe (23) gegeben. Das Schwenkgetriebe (22) mit dem relativ ortsfesten Abstützelement (25) bzw. dem Zahnrad (68) entspricht der Ausführung der vorbeschriebenen zweiten Variante von Figur 10 bis 15. In Figur 16 bis 19 sind daher der Übersicht halber das Gehäuse (19) und der Antrieb (13) nicht dargestellt. Die Gehäusegestaltung ist in Figur 23 bis 25 gezeigt.

Das Drehgetriebe (23) wird bei der dritten Variante von einem am trägerfesten Stützring (31) stirnseitig angebrachten ringförmigen Zahnkranz (81) und einem Zahnring (73) auf dem Stangenende (11) gebildet. Der Zahnring (73) ist auf dem Stangenende (11) um die Drehachse (18) drehbar gelagert und in Axialrichtung geführt. Die Drehbewegung wird gesteuert durch ein Arretierelement (74), welches vorzugsweise als Kugel ausgebildet ist, die in einem Kugelnest (75) am Zahnring (73) aufgenommen ist. Die Kugel (74) kann dadurch nur radiale Verschiebebewegungen bezüglich der Drehachse (18) ausführen. Die Kugel (74) wirkt mit einer Rastöffnung (76) am Stangenende (11) zusammen, welche im Eingriff mit der Kugel (74) die Drehbewegung des Zahnrings (73) sperrt und eine drehschlüssige Verbindung zwischen der Zugstange (8) und dem Zahnring (73) herstellt. Die Winkellage der Rastöffnung (76) gegenüber der Drehachse (18) bzw. der Mittelebene der gebogenen Zugstange (8) ist so gewählt, dass der Drehschluss beim Ausschwenken der Zugstange (8) nach ca. 90° Schwenkbewegung und in einer Betriebsstellung gemäß Figur 3, 6 und 17 erfolgt.

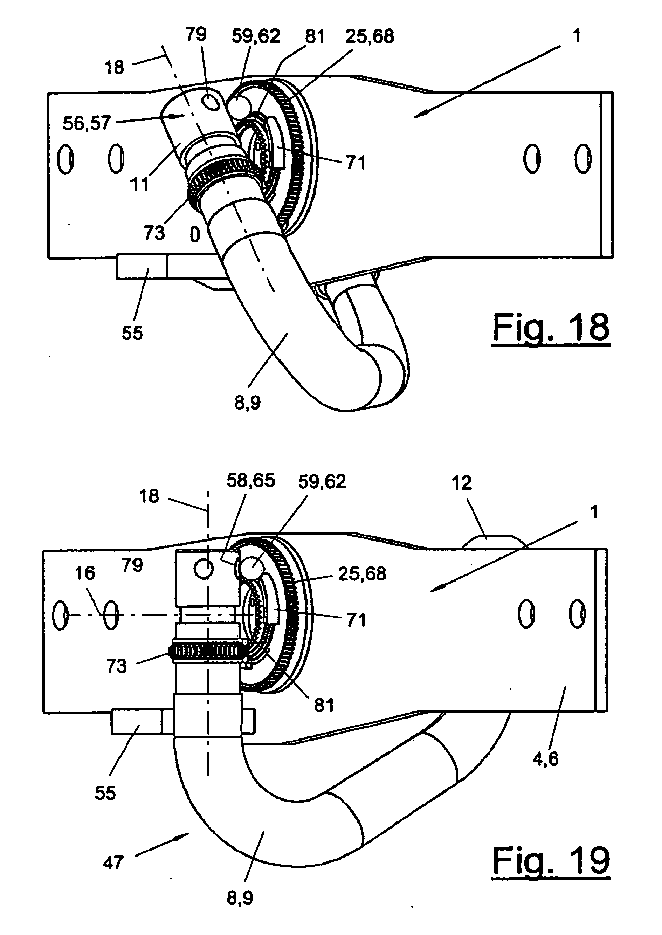

Wenn aus der Ruhestellung (48) von Figur 16 das Gehäuse (19) seine Schwenkbewegung beginnt und die Zugstange (8) mitnimmt, wälzt der Zahnring (73) auf dem Zahnkranz (81) ab und dreht sich dabei ohne nennenswerten Widerstand auf dem Stangenende (11) um die Drehachse (18). Dadurch findet keine drehende Kraftübertragung statt und die Zugstange (8) behält zunächst ihre parallel zum Querträger (4) ausgerichtete Lage. Nach ca. 90° Schwenkbewegung tritt der vorerwähnte Drehschluss ein, wobei der Zahnring (73) seine abwälzende Drehbewegung nun über die Kugel (74) auf die Zahnstange (8) überträgt und diese um die Achse (18) dreht. Figur 18 und 19 zeigen diese Betriebsstellungen. Ab dem Drehschluss überlagern sich die Schwenk- und Drehbewegung der Zugstange (8), wobei der Drehschluss bis in die ausgefahrene Betriebsstellung (47) erhalten bleibt. In der Betriebsstellung (47) können zusätzliche Verriegelungselemente an der Zugstange (8), z.B. an der Oberseite des Stangenendes (11) eingreifen und für eine drehsichere Fixierung sorgen. Eine solche Fixierung kann auch die nachfolgend beschriebene Verriegelungsvorrichtung (56) bewirken.

Zum Einschwenken werden zunächst die zusätzlichen Verriegelungselemente gelöst. Durch den bestehenden Drehschluss am Zahnring (73) dreht sich die Zugstange (8) bei der Schwenkbewegung des Gehäuses (19) mit, bis ein ortsfester Anschlag an der Stangenlagerung (nicht dargestellt) erreicht ist. Durch diesen Anschlagwiderstand wird die Kugel (74) aus der Rastöffnung (76) gezwungen, wodurch der Drehschluss aufgehoben wird und der Zahnring (73) sich frei gegenüber dem Stangenende (11) drehen kann. Die Zugstange (8) behält dann ihre Drehstellung für den restlichen Schwenkweg bis zum Erreichen der Ruhestellung (48) gemäß Figur 16.

Die Rastöffnung (76) kann abgeflachte Öffnungsflanken (77) aufweisen, um den Ein- und Austritt der Kugel (74) zu erleichtern. Figur 22 zeigt diese Anordnung. Im Gehäuse (19) ist eine dem Zahnring (73) umschließende ringförmige Ausnehmung vorhanden, die eine Stufe oder einen Anschlag besitzen kann, der in der Drehschlussstellung zusätzlich die Kugel (74) in die Rastöffnung (76) zwingt und im weiteren Verlauf der Schwenk- und Drehbewegung dort hält. Das Stangenende (11) kann im Bereich des Zahnrings (73) eine Ringnut aufweisen, mit der die Baugröße und der Durchmesser der Anordnung verringert werden können. Auf die Ringnut kann auch verzichtet werden.

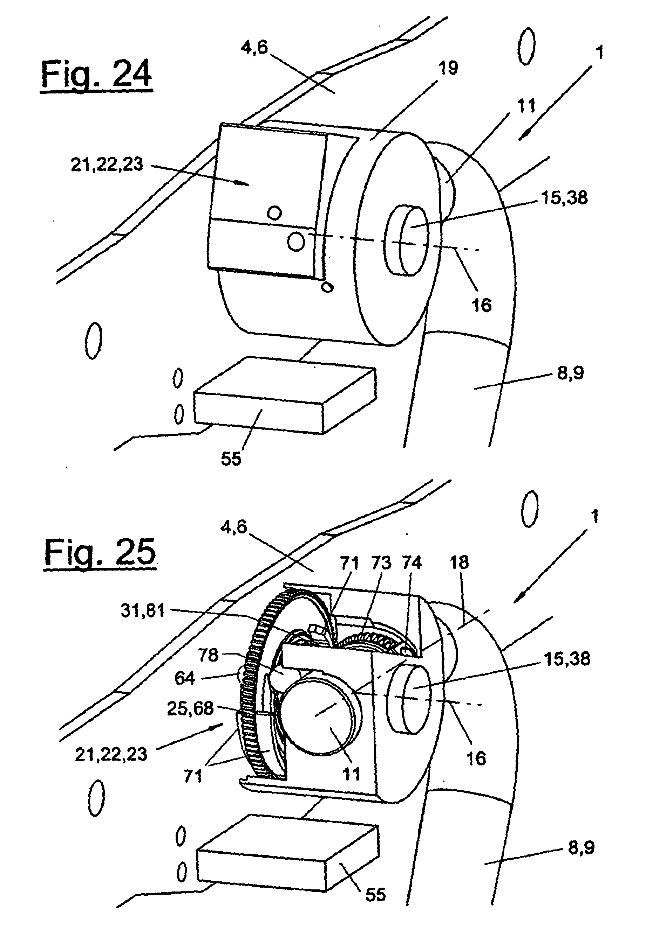

Figur 23 zeigt das Gehäuse (19), welches bei der dritten Variante etwas anders gestaltet ist als in den anderen Ausführungsbeispielen. Figur 24 und 25 zeigen die Zusammenbausituation ohne Motor (20). Das Gehäuse (19) besitzt am Boden seines Führungsteils (40), welches für die innenseitige Führung des Zahnrads (68) vorgesehen ist, eine Öffnung (82) für den innen liegenden Zahnring (73), die den Durchgriff zur Verbindung mit dem außenseitigen Zahnkranz (81) ermöglicht, welcher bei der Ansicht von Figur 23 in Blickrichtung vor dem Führungsteil (40) liegt. Das Gehäuse (19) besitzt ferner am Führungsteil (40) zwei oder mehr Öffnungen (83) für die nachfolgend näher erläuterten Sperrkugeln (78). Der Lagerzapfen (38) greift durch den stationären Stützring (31), der zugleich das Lagerauge bildet. Auf der anderen Seite ist der andere Lagerzapfen (38) direkt im Querträger (4) gelagert.

Im Ausführungsbeispiel von Figur 16 bis 25 ist die Verriegelungsvorrichtung (56) auch in der Lage, die Zugstange (8) in der eingefahrenen Ruhestellung (48) zu verriegeln. Dies geschieht ebenfalls mittels eines Riegel- oder Sperrelements (78), vorzugsweise einer Sperrkugel, die in einer Öffnung (83) des Gehäuses (19) querbeweglich geführt ist. Die Sperrkugel (78) greift in der Ruhestellung (48) formschlüssig in eine Rastöffnung (79) an der Zugstange (8), insbesondere am Stangenende (11). Der Sperrkugeleingriff wird bewirkt durch eine Kulissenführung (80) am Zahnrad (68), die durch eine Zahnraddrehung betätigt wird und die Sperrkugel (78) in die Rastöffnung (79) schiebt. Die Zahnraddrehung wird ähnlich wie bei der Verriegelung in der Betriebsstellung (47) durch ein Weiterlaufen des Antriebsmotors (20) und der Schneckenwelle (24) erreicht, wenn die Zugstange (8) in der Ruhestellung an den in Figur 7 gezeigten Anschlag (72) anläuft. Die Rastöffnung (79) kann etwas Übermaß haben, so dass die Verriegelung mit geringfügigem Spiel erfolgt.

Die Sperrkugel (78) kann eine Doppelfunktion haben und in der Betriebsstellung (47) mit der Kugelaufnahme (65) in Eingriff treten, welche mit Winkelversatz auf gleicher Höhe mit der Rastöffnung (79) liegt.

Die Anhängevorrichtung (19) kann alternativ oder zusätzlich zur elektrischen Steckdose (43) einen mit der Zugstange (8) verbundenen Stromübertrager (84) aufweisen, der in Figur 22 schematisch dargestellt ist. Der Stromübertrager (84) leitet Leistungs- und Signalströme vom Zugfahrzeug über die Anhängevorrichtung (1) über die aufgesetzte Anhängerkupplung (89) zum Anhänger. Hierbei ist in oder an der Zugstange (8) mindestens eine Leitung (87) für Leistungs- und Signalströme verlegt, die auf der Zugfahrzeugseite an eine Spannungsversorgung und einen Decoder (85) angeschlossen ist. Die Stromübertragung erfolgt bei aufgesetzter Anhängerkupplung (89) durch zwei oder mehr Kontakte (88,89) im Kugelkopf (12) und in der Kupplungspfanne. Die Kontakte (88,89) können gefedert sein, um einen sicheren Kontakt unter allen Betriebsbedingungen herzustellen. Der anhängerseitige Kontakt (89) ist ebenfalls über eine Leitung (87) mit den Stromverbrauchern des Anhängers z.B. der Anhängerbeleuchtung, den Blinkern oder dergleichen verbunden.

Die Signalleitung ist anhängerseitig an einen Encoder (86) angeschlossen. Über den Encoder (86) werden relevante Informationen, z.B. die Funktion der Beleuchtung, eines Blinkers oder dergleichen in entsprechende Signale umgewandelt, die entweder auf separatem Wege oder in Überlagerung der Leistungsströme dem Decoder (85) zugeführt werden, wo sie entschlüsselt und zur weiteren Verwertung, z.B. Ausgabe einer Alarmmeldung oder dgl. an das Zugfahrzeug weitergeleitet werden.

Anstelle des Zahnrads (68) kann ein beleibiges anderes, mit dem Antrieb in Verbindung stehendes Rad mit den Kulissenführungen (71) eingesetzt werden.

In weiterer Abwandlung kann bei Zugstangen (8), die nur um eine einzige Achse verschwenkt werden, das Zahnrad (68) umfangseitig am Stangenende (11) angeordnet sein, wobei die translatorische Verriegelungsbewegung längs der Drehachse (18) ausgeführt wird. Die gezeigten und beschriebenen erfindungsgemäßen Ausführungsbeispiele lassen sich hierbei entsprechend anwenden.

Abwandlungen der gezeigten Ausführungsformen sind auch in anderer Weise möglich. Zum Beispiel kann das Getriebe (21) anders als in den gezeigten Ausführungsbeispielen ausgebildet sein. Das gleiche gilt für den Antrieb (13).

### BEZUGSZEICHENLISTE

- 1: Anhängevorrichtung
- 2: Zugfahrzeug
- 3: Heckteil, Heckschürze
- 4: Querträger
- 5: Tragrohr
- 6: Tragplatte
- 7: Freiraum
- 8: Zugstange
- 9: Stangenhals
- 10: Krümmung
- 11: Stangenende
- 12: Zugkopf, Kugelkopf
- 13: Antrieb
- 14: Einrichtung für überlagerte Rotationsbewegung
- 15: Schwenklager
- 16: Schwenkachse
- 17: Drehlager
- 18: Drehachse
- 19: Gehäuse
- 20: Antriebsmotor
- 21: Getriebe
- 22: Getriebeteil, Schwenkgetriebe
- 23: Getriebeteil, Drehgetriebe
- 24: Antriebselement, Schneckenwelle
- 25: Abstützelement, Zahnkranz relativ ortsfest
- 26:
- 27:
- 28:
- 29:
- 30:
- 31: Stützring
- 32:
- 33: Axialsicherung
- 34:
- 35: Sicherungsnut
- 36: Stangenbund
- 37: Drehlagerfläche Zugstange
- 38: Schenklagerteil, Lagerzapfen Gehäuse
- 39: Schenklagerteil, Lagerauge Querträger
- 40: Führungsteil Gehäuse
- 41:
- 42:
- 43:
- 44:
- 45:
- 46:
- 47: Endstellung, Betriebsstellung
- 48: Endstellung, Ruhestellung
- 49:
- 50:
- 51: Dichtung
- 52: Hecköffnung
- 53: Zahnkranz am Stangenende
- 54: Zahnbogen
- 55: Anschlag für Zugstange
- 56: Verriegelungsvorrichtung
- 57: Übertragungsvorrichtung
- 58: Riegelelement
- 59: Riegelelement
- 60: Zahnleiste
- 61: Zahnleiste
- 62: Sperrkugel
- 63: Sperrkugel
- 64: Sperrkugel
- 65: Kugelaufnahme
- 66: Bewegungsgewinde
- 67: Gewindehülse
- 68: Rad, Zahnrad, Schneckenrad
- 69: Führung für Zahnrad
- 70: Drehsperre, Sperrstift
- 71: Kulissenführung
- 72: Anschlag für Kugelkopf
- 73: Zahnring
- 74: Arretierelement, Kugel
- 75: Kugelnest am Zahnring
- 76: Rastöffnung an Zugstange, Kugelaufnahme
- 77: Öffnungsflanke
- 78: Sperrelement, Sperrkugel
- 79: Rastöffnung an Zugstange, Kugelaufnahme
- 80: Kulissenführung für Sperrkugel
- 81: Zahnkranz
- 82: Öffnung für Zahnring
- 83: Öffnung für Kugel
- 84: Stromübertrager
- 85: Decoder
- 86: Encoder
- 87: Leitung
- 88: Kontakt
- 89: Kontakt
- 90: Anhängerkupplung

## Patentansprüche

1. Anhängevorrichtung für Zugfahrzeuge (2), bestehend aus einer Zugstange (8), die um mindestens eine rotatorische Achse (16,18) schwenkbar gelagert ist und von einem mechanischen Antrieb (13) zwischen einer ausgefahrenen Betriebsstellung (47) und einer eingefahrenen Ruhestellung (48) am Zugfahrzeuge (2) bewegbar ist, wobei die Anhängevorrichtung (1) eine automatische und vom mechanischen Antrieb (13) betätigbare Verriegelungsvorrichtung (56) aufweist, wobei die Verriegelungsvorrichtung (56) eine Übertragungsvorrichtung (57) aufweist zum Umsetzen der drehenden Antriebsbewegung in eine translatorische Verriegelungsbewegung für die Betätigung von formschlüssigen Riegelelementen (58,59), die an der Zugstange (8) angreifen,
***dadurch gekennzeichnet, dass***
die Übertragungsvorrichtung (57) ein mit dem mechanischen Antrieb (13) verbundenes Rad (68) mit mindestens einer Kulissenführung (71,80) aufweist, welches am Ende der Zugstangenbewegung die Riegelelemente (58,59) verschiebt und in sperrenden Eingriff mit der Zugstange (8) bringt,
wobei die Riegelelemente (58,59) als Sperrkugeln (62,63,64,78) mit Kugelaufnahmen (65,76,79) und Kugelführungen ausgebildet sind,
wobei am Stangenende (11) mehrere Kugelaufnahmen (65) für die Riegelelemente angeordnet sind.

2. Anhängevorrichtung nach Anspruch 1, **dadurch gekennzeichnet, dass** das Rad als Zahnrad (68) ausgebildet ist.

3. Anhängevorrichtung nach Anspruch 2, **dadurch gekennzeichnet, dass** ein Teil der Riegelelemente (58,59) relativ ortsfest an der Anhängevorrichtung (1) abstützbar ist.

4. Anhängevorrichtung nach einem der vorhergehenden Ansprüche, **dadurch gekennzeichnet, dass** die Riegelelemente (58,62,63) an mindestens einer Öffnung (83) im Gehäuse (19) des Antriebs (13) querbeweglich geführt sind.

5. Anhängevorrichtung nach Anspruch 1, **dadurch gekennzeichnet, dass** die Kugelaufnahmen (65) als Vertiefungen ausgebildet und in unterschiedlichen umfangseitigen Winkelstellungen und Höhenlagen am Stangenende (11) angeordnet sind, welche in Abstimmung mit der Lage der Öffnungen (83) zumindest einer Endstellung (47,48) der Zugstange (8) entsprechen.

6. Anhängevorrichtung nach einem der vorhergehenden Ansprüche, **dadurch gekennzeichnet, dass** auf der anderen Seite des Rads (68) ein oder mehrere Riegelelemente (58,64) angeordnet sind, die über eine Kulissenführung (71) mit einer relativ ortsfesten Aufnahme in Eingriff bringbar sind.

7. Anhängevorrichtung nach einem der vorhergehenden Ansprüche, **dadurch gekennzeichnet, dass** die Zugstange (8) um mindestens zwei rotatorische Achsen (16,18) drehbar gelagert ist, wobei der Antrieb (13) eine Einrichtung (14) zur Erzeugung einer überlagerten Rotationsbewegung der Zugstange (8) um beide Achsen (16,18) aufweist.

8. Anhängevorrichtung nach einem der vorhergehenden Ansprüche, **dadurch gekennzeichnet, dass** die Zugstange (8) eine kardanische Lagerung mit einem Schwenklager (15) und einem Drehlager (17) mit sich kreuzenden rotatorischen Achsen (16,18) aufweist.

9. Anhängevorrichtung nach einem der vorhergehenden Ansprüche, **dadurch gekennzeichnet, dass** die Einrichtung zur Erzeugung (14) der überlagerten Rotationsbewegung als ein die Schwenkachse (16) und die Drehachse (18) koppelndes Getriebe (21) ausgebildet ist, wobei die Drehbewegung der Zugstange (8) um die Drehachse (18) von der Schwenkbewegung der Zugstange (8) oder des Gehäuses (19) abgeleitet ist und das Getriebe (21) mehrere gekoppelte Getriebeteile (22,23) und einen gemeinsamen Antriebsmotor (20) aufweist.

10. Anhängevorrichtung nach Anspruch 9, **dadurch gekennzeichnet, dass** der mitbewegte Antriebsmotor (20) auf ein erstes Getriebeteil (22) einwirkt, welches als Schwenkgetriebe ausgebildet ist und ein mit dem Antriebsmotor (20) verbundenes Antriebselement (24), vorzugsweise eine Schneckenwelle, und ein damit im Eingriff stehendes externes relativ stationäres Abstützelement (25) aufweist, welches als umfangseitig verzahntes Zahnrad (68) ausgebildet ist.

11. Anhängevorrichtung nach einem der vorhergehenden Ansprüche, **dadurch gekennzeichnet, dass** am oder im Gehäuse (19) ein Getriebe (21) oder Getriebeteil (23) angeordnet ist, welches die Schwenkbewegung des Gehäuses (19) in eine Drehbewegung der Zugstange (8) um die Drehachse (18) umsetzt, wobei das Getriebeteil (23) einen Zahnring (73) aufweist, der mit steuerbarem Drehschluss auf der Zugstange (8) um die Drehachse (18) rotierfähig gelagert ist und der mit einem relativ stationären Zahnkranz (81) kämmt.

12. Anhängevorrichtung nach Anspruch 11, **dadurch gekennzeichnet, dass** der Zahnring (73) ein bewegliches Arretierelement (74) aufweist, welches mit einer Rastöffnung (76) an der Zugstange (8) zur Bildung der drehschlüssigen Verbindung zusammenwirkt.

13. Anhängevorrichtung nach einem der vorhergehenden Ansprüche, **dadurch gekennzeichnet, dass** das Gehäuse (19) oder die Zugstange (8) eine bei der Verriegelung eingreifende Drehsperre (70) aufweisen.

## Claims

1. Towing hitch for towing vehicles (2), comprising a tow-bar (8) which is mounted pivotably about at least one rotatory axis (16, 18) and is movable by a mechanical drive (13) between an extended operating position (47) and a retracted inoperative position (48) on the towing vehicle (2), the towing hitch (1) having an automatic locking device (56) which can be actuated by the mechanical drive (13), wherein the locking device (56) has a transmission device (57) for converting the rotating driving movement into a translatory locking movement for the actuation of form-fitting the locking elements (58, 59) which act on the tow-bar (8), **characterized in that** the transmission device (57) has a wheel (68) which is connected to the mechanical drive (13) and has at least one slotted guide mechanism (71, 80), which wheel displaces the locking elements (58, 59) at the end of the movement of the tow-bar and brings them into blocking engagement with the tow-bar (8), wherein the locking elements (58, 59) are designed as blocking balls (62, 63, 64, 78) with ball receptacles (65, 76, 79) and ball guides, wherein a plurality of ball receptacles (65) for the locking elements are arranged at the tow-bar end (11).

2. Towing hitch according to Claim 1, **characterized in that** the wheel is designed as a toothed wheel (68).

3. Towing hitch according to Claim 2, **characterized in that** a part of the locking elements (58, 59) can be supported in a relatively positionally fixed manner on the towing hitch (1).

4. Towing hitch according to one of the preceding claims, **characterized in that** the locking elements (58, 62, 63) are guided in a transversely movable manner at at least one opening (83) in the housing (19) of the drive (13).

5. Towing hitch according to Claim 1, **characterized in that** the ball receptacles (65) are designed as depressions and are arranged at the tow-bar end (11) in different circumferential angular positions and vertical positions that correspond, matching the position of the openings (83), at least to an end position (47, 48) of the tow-bar (8).

6. Towing hitch according to one of the preceding claims, **characterized in that** one or more locking elements (58, 64) are arranged on the other side of the wheel (68) and can be brought into engagement with a relatively positionally fixed receptacle via a slotted guide mechanism (71).

7. Towing hitch according to one of the preceding claims, **characterized in that** the tow-bar (8) is mounted rotatably about at least two rotatory axes (16, 18), the drive (13) having a device (14) for producing a combined rotational movement of the tow-bar (8) about both axes (16, 18).

8. Towing hitch according to one of the preceding claims, **characterized in that** the tow-bar (8) has a cardanic mounting with a pivot bearing (15) and a rotary bearing (17) with intersecting rotatory axes (16, 18).

9. Towing hitch according to one of the preceding claims, **characterized in that** the device for producing (14) the combined rotational movement is designed as a gear mechanism (21) coupling the pivot axis (16) and the axis of rotation (18), with the rotational movement of the tow-bar (8) about the axis of rotation (18) being derived from the pivoting movement of the tow-bar (8) or of the housing (19), and the gear mechanism (21) having a plurality of coupled gear mechanism parts (22, 23) and a common driving motor (20).

10. Towing hitch according to Claim 9, **characterized in that** the driving motor (20) which is moved at the same time acts on a first gear mechanism part (22) which is designed as a pivoting gear mechanism and has a driving element (24) connected to the driving motor (20), preferably a worm shaft, and an external, relatively stationary supporting element (25) which is in engagement therewith and is designed as a circumferentially toothed wheel (68).

11. Towing hitch according to one of the preceding claims, **characterized in that** a gear mechanism (21) or gear mechanism part (23) is arranged on or in the housing (19) and converts the pivoting movement of the housing (19) into a rotational movement of the tow-bar (8) about the axis of rotation (18), the gear mechanism part (23) having a toothed ring (73) which is mounted rotatably about the axis of rotation (18) with a controllable rotational lock on the tow-bar (8) and which meshes with a relatively stationary toothed rim (81).

12. Towing hitch according to Claim 11, **characterized in that** the toothed ring (73) has a movable retaining element (74) which interacts with a latching opening (76) on the tow-bar (8) to form the rotationally locking connection.

13. Towing hitch according to one of the preceding claims, **characterized in that** the housing (19) or the tow-bar (8) has a rotation block (70) which engages during the locking.

## Revendications

1. Attelage pour véhicules de traction (2) constitué d'une barre de traction (8) qui est montée pivotante autour d'au moins un axe (16, 18) de rotation et qui peut être déplacée par un entraînement (13) mécanique entre une position (47) de fonctionnement sortie et une position (48) de repos rentrée sur le véhicule (2) de traction, l'attelage (1) ayant un dispositif (56) de verrouillage automatique et pouvant être actionné par l'entraînement (13) mécanique, le dispositif (56) de verrouillage ayant un dispositif (57) de transmission pour transformer le mouvement d'entraînement en rotation en un mouvement de verrouillage en translation pour l'actionnement d'éléments (58, 59) de verrou à complémentarité de forme, qui s'engagent avec la barre (8) de traction, **caractérisé en ce que** le dispositif (57) de transmission a une roue (68) reliée à l'entraînement (13) mécanique et ayant au moins un guidage (71, 80) à coulisse, qui déplace à la fin du mouvement de la barre de traction les éléments (58, 59) de verrou et qui les met en prise bloquante avec la barre (8) de traction, les éléments (58, 59) de verrou étant constitués sous la forme de billes (62, 63, 64, 78) de blocage ayant des logements (65, 76, 79) de billes et des guidages de billes, plusieurs logements (65) de billes pour les éléments de verrou étant disposés à l'extrémité (11) de la barre.

2. Attelage suivant la revendication 1 **caractérisé en ce que** la roue est constituée sous la forme d'une roue (68) dentée.

3. Attelage suivant la revendication 2 **caractérisé en ce qu'**une partie des éléments (58, 59) de verrou peut s'appuyer de manière relativement fixe sur l'attelage (1).

4. Attelage suivant l'une des revendications précédentes **caractérisé en ce que** les éléments (58, 62, 63) de verrou sont guidés à mouvement transversal sur au moins une ouverture (83) du carter (19) de l'entraînement (13).

5. Attelage suivant la revendication 1 **caractérisé en ce que** les logements (65) de billes sont constitués sous forme de cavités et sont disposés sur l'extrémité (11) de la barre en des positions angulaires et périphériques et en des positions en hauteur différentes qui, en correspondance avec la position des ouvertures (83), correspondent au moins à une position (47, 48) d'extrémité de la barre (8) de traction.

6. Attelage suivant l'une des revendications précédentes **caractérisé en ce que** de l'autre côté de la roue (68) sont disposés un ou plusieurs éléments (58, 64) de verrou, qui peuvent être mis en prise par un guidage (71) à coulisse avec un logement relativement fixe.

7. Attelage suivant l'une des revendications précédentes **caractérisé en ce que** la barre (8) de traction est montée tournante sur au moins deux axes (16, 18) de rotation, l'entraînement (13) ayant un dispositif (14) de production d'un mouvement de rotation superposé de la barre (8) de traction autour des deux axes (16, 18).

8. Attelage suivant l'une des revendications précédentes **caractérisé en ce que** la barre (8) de traction a un montage à la cardan ayant un palier (15) de pivot et un palier (17) de rotation ayant des axes (16, 18) de rotation qui se croisent.

9. Attelage suivant l'une des revendications précédentes **caractérisé en ce que** le dispositif de production (14) du mouvement de rotation superposé est constitué sous la forme d'un engrenage (21) couplant l'axe (16) de pivotement et l'axe (18) de rotation, le mouvement de rotation de la barre (8) de traction autour de l'axe (18) de rotation dérivant du mouvement de pivotement de la barre (8) de traction ou du carter (19) et l'engrenage (21) ayant plusieurs parties (22, 23) d'engrenage qui sont couplées et un moteur (20) d'entraînement commun.

10. Attelage suivant la revendication 9 **caractérisé en ce que** le moteur (20) d'entraînement mû en même temps agit sur une première partie (22) d'engrenage, qui est constituée en un engrenage pivotant et a un élément (24) d'entraînement relié au moteur (20) d'entraînement, de préférence un arbre à vis, et un élément (25) d'appui d'extérieur relativement fixe en prise avec cet arbre et constitué sous la forme d'une roue (68) dentée du côté périphérique.

11. Attelage suivant l'une des revendications précédentes **caractérisé en ce qu'**il est disposé sur ou dans le carter (19) un engrenage (21) ou une partie (23) d'engrenage, qui transforme le mouvement de pivotement du carter (19) en mouvement de rotation de la barre (8) de traction autour de l'axe (18) de rotation, la partie (23) d'engrenage ayant un anneau (73) denté qui est monté sur la barre (8) de traction, avec possibilité de tourner autour de l'axe (18) de rotation, avec engagement rotatif commandable et qui engrène avec une couronne (81) dentée relativement fixe.

12. Attelage suivant la revendication 11 **caractérisé en ce que** l'anneau (73) denté a un élément (74) d'arrêt mobile, qui coopère avec une ouverture (76) d'encliquetage sur la barre (8) de traction pour la formation de l'assemblage par engagement rotatif.

13. Attelage suivant l'une des revendications précédentes **caractérisé en ce que** le carter (19) ou la barre (8) de traction ont un blocage (70) en rotation s'engageant lors du verrouillage.
